(19) Europäisches Patentamt
European Patent Office
Office européen des brevets

(11) **EP 4 675 691 A1**

(12) **EUROPEAN PATENT APPLICATION**
published in accordance with Art. 153(4) EPC

(43) Date of publication:
**07.01.2026 Bulletin 2026/02**

(21) Application number: **23934540.8**

(22) Date of filing: **27.04.2023**

(51) International Patent Classification (IPC):
**H01M 4/13** (2010.01)          **H01M 10/42** (2006.01)

(52) Cooperative Patent Classification (CPC):
**H01M 4/5825; H01M 4/131; H01M 4/136;
H01M 4/525; H01M 10/0525; H01M 16/00;**
H01M 2010/4292; Y02E 60/10

(86) International application number:
**PCT/CN2023/091222**

(87) International publication number:
**WO 2024/221343 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **XU, Xiaofu
Ningde, Fujian 352100 (CN)**

• **QIN, Yiming
Ningde, Fujian 352100 (CN)**
• **YE, Yonghuang
Ningde, Fujian 352100 (CN)**
• **HE, Jianfu
Ningde, Fujian 352100 (CN)**
• **PAN, Jianfu
Ningde, Fujian 352100 (CN)**
• **SHANG, Yibo
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **CELL COMBINATION, BATTERY, AND ELECTRIC APPARATUS**

(57)    A cell combination, a battery, and an electric apparatus. The cell combination comprises first cells and second cells, wherein the number of first cells is greater than or equal to the number of second cells, and each of the first cells and the second cells comprises a positive electrode sheet and a negative electrode sheet; the cell combination satisfies: $0.7 \leq NPA1 \leq 1.05$ NPB1 and NPA1<1, or $0.75 \leq NPA2 \leq 1.05$ NPB2 and NPA2<1.2; and when the state of charge of a single-cell battery comprising a second cell is in the range of 95% to 100%, each time the state of charge of the single-cell battery is changed by 1%, a voltage change of the second cell is correspondingly greater than 5 mV.

FIG. 1

EP 4 675 691 A1

**Description**

TECHNICAL FIELD

The present application relates to the technical field of secondary batteries, and in particular, to a cell combination, a battery, and an electric device.

BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, electric vehicles, military equipment, and aerospace. As secondary batteries have achieved great development, higher requirements have been placed on aspects such as cycle performance and safety performance.

SUMMARY

The present application is made in view of the above subject, and its objective is to provide a cell combination, a battery, and an electric device. The use of the cell combination of the present application is beneficial for reducing the overcharge of the battery, thereby improving the safety performance and prolonging the cycle life of the battery.

In order to achieve the above objective, a first aspect of the present application provides a cell combination including a first cell and a second cell, where a number of the first cell is greater than or equal to a number of the second cell, and the first cell and the second cell both include a positive electrode plate and a negative electrode plate;

and the cell combination satisfies:

$0.7 \leq NP_{A1} \leq 1.05\ NP_{B1}$ and $NP_{A1} < 1$, or $0.75 \leq NP_{A2} \leq 1.05\ NP_{B2}$ and $NP_{A2} < 1.2$;

where the $NP_{A1}$ is a ratio of a first lithium intercalation specific capacity of the negative electrode plate to a first lithium deintercalation specific capacity of the positive electrode plate in the first cell; the $NP_{B1}$ is a ratio of a first lithium intercalation specific capacity of the negative electrode plate to a first lithium deintercalation specific capacity of the positive electrode plate in the second cell; the $NP_{A2}$ is a ratio of a non-first lithium intercalation specific capacity of the negative electrode plate to a non-first lithium deintercalation specific capacity of the positive electrode plate in the first cell, and the $NP_{B2}$ is a ratio of a non-first lithium intercalation specific capacity of the negative electrode plate to a non-first lithium deintercalation specific capacity of the positive electrode plate in the second cell;

when a state of charge (SOC) of a single-cell battery including the second cell is within a range of 95% to 100%, a voltage change of the second cell is correspondingly greater than 5 mV for each 1% change in the SOC of the single-cell battery.

The limit design that the NP of the battery cell is less than 1 is beneficial for reducing the amount of the negative electrode active material, thereby lowering the cost. In addition, the space saved can further increase the capacity. However, such a design can result in a minor voltage change of the corresponding cell for each 1% change in the SOC of the single-cell battery when the SOC of the single-cell battery approaches a saturation level, making the cell prone to overcharging and posing safety risks.

According to the present application, by employing a cell combination where the number of the first cell is greater than or equal to the number of the second cell, limiting that when the SOC of the single-cell battery including the second cell approaches a saturation level, the voltage change of the corresponding second cell is greater than 5 mV for each 1% change of the SOC of the single-cell battery, and limiting the $NP_{A1}$ value and the relationship between the $NP_{A1}$ value and $NP_{B1}$, or limiting the $NP_{A2}$ value and the relationship between the $NP_{A2}$ value and $NP_{B2}$, it is beneficial for reducing the occurrence of overcharge of the battery, thereby improving the safety performance and prolonging the cycle life of the battery.

In any embodiment, when the SOC of the single-cell battery including the first cell is within a range of 95% to 100%, a voltage change of the first cell is correspondingly less than or equal to 5 mV for each 1% change in the SOC of the single-cell battery.

When the first cell reaches the limit design, the first cell satisfies the voltage change characteristic described above.

In any embodiment, the cell combination satisfies:

$$0.08 \leq (1.1 - NP_{A1})/(NP_{B1} - 1) \leq 20;$$

preferably,

$$0.1 \leq (1.1 - NP_{A1})/(NP_{B1} - 1) \leq 15.$$

Therefore, when the above relationship is met, the initial voltage of the battery is limited while satisfying the required battery capacity, which enables the formation of a stable and dense SEI film within a relatively low voltage range, thereby prolonging the cycle life of the battery.

In any embodiment, the cell combination satisfies:

$$0.95 \leq C_B/C_A \leq 1.4, \text{ optionally } 1.0 \leq C_B/C_A \leq 1.3,$$

where $C_A$ is a capacity across the widest applicable voltage range throughout the entire life cycle of the first cell, and $C_B$ is a capacity across the widest applicable voltage range throughout the entire life cycle of the second cell.

Therefore, according to the present application, by matching the capacity designs of the first cell and the second cell, the service life matching across the entire life cycle of the battery is satisfied, thereby prolonging the cycle life of the battery, and improving the safety performance of the battery throughout the entire life cycle.

In any embodiment, the positive electrode plate in the first cell includes a first positive electrode active material, and the first positive electrode active material contains a compound $Li_aA_xMn_{1-y}B_yP_{1-z}C_zO_{4-n}D_n$,

where the A includes one or more elements of Zn, Al, Na, K, Mg, Nb, Mo, and W; the B includes one or more elements of Ti, V, Zr, Fe, Ni, Mg, Co, Ga, Sn, Sb, Nb, and Ge; the C includes one or more elements of B (boron), S, Si, and N; the D includes one or more elements of S, F, Cl, and Br; the a is 0.85 to 1.15; the x is 0 to 0.1; the y is 0.001 to 1; the z is 0 to 0.5; the n is 0 to 0.5.

In any embodiment, the first positive electrode active material includes a core and a coating layer coating the core, where the core contains the compound $Li_aA_xMn_{1-y}B_yP_{1-z}C_zO_{4-n}D_n$, and the coating layer contains a carbon element.

Therefore, according to the present application, by using the above first positive electrode active material to enable the NP of the first cell to reach the limit design, it is beneficial for improving the energy density of the first cell.

In any embodiment, the positive electrode plate in the second cell includes a second positive electrode active material, and the second positive electrode active material contains a compound $LiNi_bCO_dMn_eM_fO_2$,

where the M includes one or more elements of Mn, Al, Mg, Ca, Na, Ti, W, Zr, Sr, Cr, Zn, Ba, B, S, and Y, and optionally includes an element Mg and/or an element Al; the b is 0.314 to 0.970; the d is 0 to 0.320, optionally 0.047 to 0.320; the e is 0.006 to 0.390; in addition, the sum of the b, d, e, and f is 1, and the f is greater than 0.

In any embodiment, the positive electrode plate in the second cell further includes a third positive electrode active material; the third positive electrode active material includes a core and a shell coating the core, and the shell includes a first coating layer coating the core, a second coating layer coating the first coating layer, and a third coating layer coating the second coating layer; the core contains a compound $Li_{1+g}Mn_{1-h}E_hP_{1-i}R_iO_4$, the first coating layer contains crystalline pyrophosphate $Li_jGP_2O_7$ and/or $G_k(P_2O_7)_r$, the second coating layer contains crystalline phosphate $X_tPO_4$, and the third coating layer contains the carbon element,

where the E includes one or more elements of Zn, Al, Na, K, Mg, Mo, W, Ti, V, Zr, Fe, Ni, Co, Ga, Sn, Sb, Nb, and Ge, and optionally includes one or more elements of Fe, V, Ni, and Co; the R includes one or more elements of B, Si, N, and S, and optionally includes one or more elements of Si, N, and S; each G in the crystalline pyrophosphate $Li_jGP_2O_7$ and $G_k(P_2O_7)_r$ independently includes one or more elements of Fe, Ni, Mg, Co, Cu, Zn, Ti, Ag, Zr, Nb, and Al, and optionally includes one or more elements of Fe, Co, Ti, and Al; the X includes one or more elements of Li, Fe, Ni, Mg, Co, Cu, Zn, Ti, Ag, Zr, Nb, and Al, and optionally includes one or more elements of Li, Fe, Ag, and Al; the g is -0.100 to 0.100; the h is 0.001 to 0.600; the i is 0.001 to 0.100; the j is greater than 0 and less than or equal to 2; the k is 1 to 4; the r is 1 to 3; the t is greater than 0 and less than or equal to 2.

Therefore, according to the present application, by using the above second positive electrode active material and optional third positive electrode active material in the second cell, the compaction density of the second cell is improved, the thermal stability of the battery is improved, and the cycle life of the battery is prolonged.

In any embodiment, in the positive electrode plate of the second cell, a proportion of a mass of the second positive electrode active material in a total mass of the second positive electrode active material and the third positive electrode active material is 5% to 100%, optionally 5% to 95%.

Therefore, the compaction density of the second cell is further improved, the thermal stability of the battery is further improved, and the cycle life of the battery is further prolonged.

A second aspect of the present application provides a battery. The battery includes the cell combination according to the first aspect of the present application.

In any embodiment, an upper-limit voltage of the second cell during the 90th to 110th charge-discharge cycles of the battery is greater than an upper-limit voltage of the second cell during the first charge-discharge cycle of the battery.

Therefore, the initial voltage of the battery is limited by the relatively low initial upper-limit voltage of the second cell while satisfying the required battery capacity, which enables the formation of a stable and dense SEI film within a relatively low voltage range, thereby prolonging the cycle life of the battery after the voltage range is later expanded.

A second aspect of the present application further provides an electric device. The electric device includes the battery according to the first aspect of the present application.

BRIEF DESCRIPTION OF THE DRAWINGS

FIG. 1 is a schematic view of a secondary battery according to one embodiment of the present application.

FIG. 2 is an exploded view of the secondary battery according to one embodiment of the present application shown in FIG. 1.

FIG. 3 is a schematic diagram of a battery module according to one embodiment of the present application.

FIG. 4 is a schematic diagram of a battery pack according to one embodiment of the present application.

FIG. 5 is an exploded view of the battery pack according to one embodiment of the present application shown in FIG. 4.

FIG. 6 is a schematic diagram of an electric device using a secondary battery as a power source according to one embodiment of the present application.

Description of the reference numerals:

1: battery pack; 2: upper case body; 3: lower case body; 4: battery module; 5: secondary battery; 51: housing; 52: electrode assembly; 53: top cover assembly.

DETAILED DESCRIPTION

Hereinafter, embodiments of the cell combination, the secondary battery, the battery module, the battery pack, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer of $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

[Secondary Battery]

Secondary batteries, also known as rechargeable batteries or storage batteries, refer to batteries that can continue to be used by reactivating their active materials through charging after discharging.

Typically, a secondary battery includes a cell or a cell combination, and the cell or the cell combination includes a positive electrode plate, a negative electrode plate, a separator, and an electrolytic solution. During the charging and discharging process of the battery, active ions (such as lithium ions) are intercalated and deintercalated back and forth between the positive electrode plate and the negative electrode plate. The separator is disposed between the positive electrode plate and the negative electrode plate to primarily prevent the positive and negative electrodes from short-circuiting, while allowing the passage of active ions. The electrolytic solution is disposed between the positive electrode plate and the negative electrode plate to primarily conduct active ions.

[Cell Combination]

The embodiments of the present application provide a cell combination. The cell combination includes a first cell and a second cell, where the number of the first cell is greater than or equal to the number of the second cell, and the first cell and the second cell both include a positive electrode plate and a negative electrode plate;
and the cell combination satisfies:

$0.7 \leq NP_{A1} \leq 1.05 \ NP_{B1}$ and $NP_{A1} < 1$, or $0.75 \leq NP_{A2} \leq 1.05 \ NP_{B2}$ and $NP_{A2} < 1.2$;

where the $NP_{A1}$ is a ratio of a first lithium intercalation specific capacity of the negative electrode plate to a first lithium deintercalation specific capacity of the positive electrode plate in the first cell; the $NP_{B1}$ is a ratio of a first lithium intercalation specific capacity of the negative electrode plate to a first lithium deintercalation specific capacity of the positive electrode plate in the second cell; the $NP_{A2}$ is a ratio of a non-first lithium intercalation specific capacity of the negative electrode plate to a non-first lithium deintercalation specific capacity of the positive electrode plate in the first cell, and the $NP_{B2}$ is a ratio of a non-first lithium intercalation specific capacity of the negative electrode plate to a non-first lithium deintercalation specific capacity of the positive electrode plate in the second cell;

when a state of charge (SOC) of a single-cell battery including the second cell is within a range of 95% to 100%, a voltage change of the second cell is correspondingly greater than 5 mV for each 1% change in the SOC of the single-cell battery.

The limit design that the NP of the battery cell is less than 1 is beneficial for reducing the amount of the negative electrode active material, thereby lowering the cost. In addition, the space saved can further increase the capacity. However, such a design can result in a minor voltage change of the corresponding cell for each 1% change in the SOC of the single-cell battery when the SOC of the single-cell battery approaches a saturation level, making the cell prone to overcharging and posing safety risks.

Although the mechanism remains unclear, the present inventor has unexpectedly discovered that: by employing a cell combination where the number of the first cells is greater than or equal to the number of the second cells and limiting the SOC of the single-cell battery including the second cell to a near-saturation level in the present application, the voltage change of the corresponding second cell is greater than 5 mV for each 1% change of the SOC of the single-cell battery; in addition, by limiting the $NP_{A1}$ value and the relationship between the $NP_{A1}$ value and $NP_{B1}$, or by limiting the $NP_{A2}$ value and the relationship between the $NP_{A2}$ value and $NP_{B2}$, it is beneficial for reducing the occurrence of overcharge of the battery, thereby improving the safety performance and prolonging the cycle life of the battery.

In some embodiments, when the SOC of the single-cell battery including the first cell is within a range of 95% to 100%, the voltage change of the first cell is correspondingly less than or equal to 5 mV for each 1% change in the SOC of the single-cell battery.

When the first cell reaches the limit design, the first cell satisfies the voltage change characteristic described above.

In some embodiments, when the SOC of the single-cell battery is within a range of 95% to 100%, the voltage change value of the first cell or the second cell for each 1% change in the SOC of the single-cell battery is determined using conventional methods in the art. For example, the specific method is as follows: The first cell or the second cell is assembled into a single-cell battery according to the conventional method. Under a constant temperature environment of 25 °C, the battery is rested for 10 min and discharged to the cut-off voltage at a constant current of 0.1C. Then, the battery is rested for another 10 min and charged to the target voltage at a constant current of 0.04C. After resting for 10 min, the battery is discharged to the cut-off voltage at a constant current of 0.04C, and then rested again for 10 min and charged to the target voltage at a constant current of 0.04C. The charge capacity at this point is recorded as 100% SOC. After resting for another 10 min, the battery is discharged to the cut-off voltage at a constant current of 0.04C. A graph is plotted with the charge capacity of the final charging process as the y-axis and the voltage as the x-axis. The voltage Vm corresponding to 95% SOC and the voltage Vn corresponding to 100% SOC are derived from the graph. Thus, when the SOC of the battery is within the range of 95% to 100%, the voltage change value of the first cell or the second cell for each 1% change in the SOC of the battery is calculated as (Vn - Vm)/5.

In some embodiments, the first lithium intercalation specific capacity and the non-first lithium intercalation specific capacity of the negative electrode plate, as well as the first lithium deintercalation specific capacity and the non-first lithium intercalation specific capacity of the positive electrode plate, are determined using conventional methods in the art. For example, the method for determining the first lithium deintercalation specific capacity and the non-first lithium intercalation specific capacity of the positive electrode piece is as follows: The positive electrode plate and the counter electrode lithium foil are assembled into a button battery. Under a constant temperature environment of 25 °C, the battery is charged to 4.35 V at a constant current of 0.1C, and then discharged to 2.8 V at 0.1C. The discharge capacity of the first cycle is recorded, and the discharge capacity of the first cycle is divided by the mass of the positive electrode active material in the positive electrode plate to obtain the first lithium deintercalation specific capacity of the positive electrode plate. Then, the button battery is subjected to two additional charge-discharge cycles using the same method, making a total of three cycles. The charge-discharge capacity of the second cycle is recorded as the non-first-cycle discharge capacity, and the non-first-cycle discharge capacity is divided by the mass of the positive electrode active material in the positive electrode plate to obtain the non-first lithium deintercalation specific capacity of the positive electrode plate. For example, the method for determining the first lithium intercalation specific capacity and the non-first lithium intercalation specific capacity of the negative electrode plate is as follows: The negative electrode plate and the counter electrode lithium foil are assembled into a button battery. Under a constant temperature environment of 25 °C, the battery is charged to 2.0 V at a constant current of 0.1C, and then discharged to 0 V at 0.1C. The discharge capacity of the first cycle is recorded, and the discharge capacity of the first cycle is divided by the mass of the negative electrode active material in the negative electrode plate to obtain the first lithium intercalation specific capacity of the negative electrode plate. Then, the button battery is subjected to two additional charge-discharge cycles using the same method, making a total of three cycles. The charge-discharge capacity of the second cycle is recorded as the non-first-cycle discharge capacity, and the non-first-cycle discharge capacity is divided by the mass of the negative electrode active material in the negative electrode plate to obtain the non-first lithium intercalation specific capacity of the negative electrode plate.

In some embodiments, the cell combination satisfies:

$$0.08 \leq (1.1 - NP_{A1})/(NP_{B1} - 1) \leq 20;$$

preferably, $0.1 \leq (1.1 - NP_{A1})/(NP_{B1} - 1) \leq 15$; for example, $(1.1 - NP_{A1})/(NP_{B1} - 1)$ is 0.2, 0.3, 0.6, 0.8, 1, 2, 3, 5, 7, 8, 10, 12, 14, 16, 17, 18, 19, or a range composed of any of the foregoing numerical values.

Therefore, when the above relationship is met, the initial voltage of the battery is limited while satisfying the required battery capacity, which enables the formation of a stable and dense SEI film within a relatively low voltage range, thereby prolonging the cycle life of the battery.

In some embodiments, the cell combination satisfies:

$$0.95 \leq C_B/C_A \leq 1.4;$$

optionally, $1.0 \leq C_B/C_A \leq 1.3$; for example, $C_B/C_A$ is 1.1, 1.2, 1.25, or a range composed of any of the foregoing numerical values,

where $C_A$ is a capacity across the widest applicable voltage range throughout the entire life cycle of the first cell, and $C_B$ is a capacity across the widest applicable voltage range throughout the entire life cycle of the second cell.

Therefore, according to the present application, by matching the capacity designs of the first cell and the second cell, the service life matching across the entire life cycle of the battery is satisfied, thereby prolonging the cycle life of the battery, and improving the safety performance of the battery throughout the entire life cycle.

In some embodiments, the positive electrode plate in the first cell includes a first positive electrode active material. The first positive electrode active material contains a compound $Li_aA_xMn_{1-y}B_yP_{1-z}C_zO_{4-n}D_n$,

where the A includes one or more elements of Zn, Al, Na, K, Mg, Nb, Mo, and W; the B includes one or more elements of Ti, V, Zr, Fe, Ni, Mg, Co, Ga, Sn, Sb, Nb, and Ge, and optionally includes Ti and/or Fe; the C includes one or more elements of B (boron), S, Si, and N; the D includes one or more elements of S, F, Cl, and Br; the a is 0.85 to 1.15, e.g., 0.85, 0.90, 0.95, 1.00, 1.05, 1.10, 1.15, or a range composed of any of the foregoing numerical values; the x is 0 to 0.1, optionally 0, e.g., 0, 0.01, 0.02, 0.03, 0.04, 0.05, 0.06, 0.08, 0.09, 0.1, or a range composed of any of the foregoing numerical values; the y is 0.001 to 1, e.g., 0.005, 0.008, 0.01, 0.03, 0.05, 0.08, 0.1, 0.3, 0.5, 0.7, 0.8, 0.9, 0.95, 1, or a range composed of any of the foregoing numerical values; the z is 0 to 0.5, e.g., 0, 0.1, 0.2, 0.3, 0.4, 0.5, or a range composed of any of the foregoing numerical values; the n is 0 to 0.5, e.g., 0, 0.1, 0.2, 0.3, 0.4, 0.5, or a range composed of any of the foregoing numerical values.

In some embodiments, the first positive electrode active material includes a core and a coating layer coating the core. The core contains the compound $Li_aA_xMn_{1-y}B_yP_{1-z}C_zO_{4-n}D_n$, and the coating layer contains a carbon element.

Therefore, according to the present application, by using the above first positive electrode active material to enable the NP of the first cell to reach the limit design, it is beneficial for improving the energy density of the first cell.

In some embodiments, the positive electrode plate in the second cell includes a second positive electrode active material. The second positive electrode active material contains a compound $LiNi_bCo_dMn_eM_fO_2$,

where the M includes one or more elements of Mn, Al, Mg, Ca, Na, Ti, W, Zr, Sr, Cr, Zn, Ba, B, S, and Y, and optionally includes an element Mg and/or an element Al; the b is 0.314 to 0.970, e.g., 0.4, 0.5, 0.55, 0.6, 0.7, 0.8, 0.9, or a range composed of any of the foregoing numerical values; the d is 0 to 0.320, optionally 0.047 to 0.320, e.g., 0.050, 0.060, 0.080, 0.100, 0.120, 0.141, 0.160, 0.180, 0.200, 0.250, 0.270, 0.300, 0.310, or a range composed of any of the foregoing numerical values; the e is 0.006 to 0.390, e.g., 0.010, 0.020, 0.050, 0.080, 0.100, 0.130, 0.170, 0.200, 0.220, 0.230, 0.249, 0.260, 0.280, 0.300, 0.320, 0.350, 0.370, 0.380, or a range composed of any of the foregoing numerical values; in addition, the sum of the b, d, e, and f is 1, and the f is greater than 0.

In some embodiments, the positive electrode plate in the second cell further includes a third positive electrode active material. The third positive electrode active material includes a core and a shell coating the core, and the shell includes a first coating layer coating the core, a second coating layer coating the first coating layer, and a third coating layer coating the second coating layer. The core contains a compound $Li_{1+g}Mn_{1-h}E_hP_{1-i}R_iO_4$, the first coating layer contains crystalline pyrophosphate $Li_jGP_2O_7$ and/or $G_k(P_2O_7)_r$, the second coating layer contains crystalline phosphate $X_tPO_4$, and the third coating layer contains the carbon element,

where the E includes one or more elements of Zn, Al, Na, K, Mg, Mo, W, Ti, V, Zr, Fe, Ni, Co, Ga, Sn, Sb, Nb, and Ge, optionally includes one or more elements of Fe, V, Ni, and Co, and more optionally includes one or more elements of Fe, V, and Co; the R includes one or more elements of B, Si, N, and S, optionally includes one or more elements of Si, N, and S, and more optionally includes an element Si; each G in the crystalline pyrophosphate $Li_jGP_2O_7$ and $G_k(P_2O_7)_r$ independently includes one or more elements of Fe, Ni, Mg, Co, Cu, Zn, Ti, Ag, Zr, Nb, and Al, optionally includes one or more elements of Fe, Co, Ti, and Al, and more optionally includes an element Fe; the X includes one or more elements of Li, Fe, Ni, Mg, Co, Cu, Zn, Ti, Ag, Zr, Nb, and Al, optionally includes one or more elements of Li, Fe, Ag, and Al, and more optionally includes an element Li and/or an element Fe; the g is -0.100 to 0.100, e.g., -0.05, -0.01, 0, 0.001, 0.005, 0.01, 0.02, 0.05, 0.07, 0.08, 0.09, or a range composed of any of the foregoing numerical values; the h is 0.001 to 0.600, e.g., 0.005, 0.01, 0.03, 0.05, 0.07, 0.1, 0.2, 0.3, 0.4, 0.5, or a range composed of any of the foregoing numerical values; the i is 0.001 to 0.100, e.g., 0.001, 0.003, 0.007, 0.01, 0.04, 0.06, 0.08, 0.1, or a range composed of any of the foregoing numerical values; the j is greater than 0 and less than or equal to 2; the k is 1 to 4; the r is 1 to 3; the t is greater than 0 and less than or equal to 2.

Therefore, according to the present application, by using the above second positive electrode active material and optional third positive electrode active material in the second cell, the compaction density of the second cell is improved, the thermal stability of the battery is improved, and the cycle life of the battery is prolonged.

In some embodiments, $Li_aA_xMn_{1-y}B_yP_{1-z}C_zO_{4-n}D_n$, $LiNi_bCo_dMn_eM_fO_2$, $Li_{1+g}Mn_{1-h}E_hP_{1-i}R_iO_4$, $Li_jGP_2O_7$, $G_k(P_2O_7)_r$, and $X_tPO_4$ are all electrically neutral.

In some embodiments, in the positive electrode plate of the second cell, the proportion of the mass of the second positive electrode active material in the total mass of the second positive electrode active material and the third positive electrode active material is 5% to 100%, optionally 5% to 95%, e.g., 10%, 20%, 30%, 40%, 50%, 60%, 70%, 80%, 90%, or a range composed of any of the foregoing numerical values.

Therefore, the compaction density of the second cell is further improved, the thermal stability of the battery is further improved, and the cycle life of the battery is further prolonged.

In some embodiments, the preparation method for the first positive electrode active material according to the present application includes the following steps:

(1) dissolving a manganese source, a source of element B, and an acid in a solvent and stirring the mixture to generate a suspension of a manganese salt doped with the element B, filtering the suspension, and drying a filter cake to obtain the manganese salt doped with the element B;

(2) adding a lithium source, a phosphorus source, a source of element A, a source of element C, a source of element D, a solvent, and the manganese salt doped with the element B obtained in Step (1) into a reaction vessel, and grinding to mix the components to obtain a slurry;

(3) transferring the slurry obtained in Step (2) to a spray drying device for spray drying and granulation to obtain particles; and

(4) sintering the particles obtained in Step (3).

In some embodiments, the source of element A is selected from at least one of the simple substance, oxide, phosphate, oxalate, carbonate, and sulfate of the element A; the source of element B is selected from at least one of the simple substance, oxide, phosphate, oxalate, carbonate, and sulfate of the element B; the source of element C is selected from at least one of the simple substance, sulfate, borate, nitrate, and silicate of the element C; the source of element D is selected from at least one of the simple substance and ammonium salt of the element D. By selecting the sources of doping elements, the uniformity of the distribution of the doping elements can be improved, thereby improving the performance of the material.

In some embodiments, the acid is selected from one or more of hydrochloric acid, sulfuric acid, nitric acid, phosphoric acid, organic acids (such as oxalic acid), and the like, for example, oxalic acid. In some embodiments, the acid is a dilute acid having a concentration of 60 wt% or less.

In some embodiments, the manganese source may be a manganese-containing material known in the art for preparing lithium manganese phosphate. For example, the manganese source may be selected from one of elemental manganese, manganese dioxide, manganese phosphate, manganese oxalate, and manganese carbonate, or a combination thereof.

In some embodiments, the lithium source may be a lithium-containing material known in the art for preparing lithium manganese phosphate. For example, the lithium source may be selected from one of lithium carbonate, lithium hydroxide, lithium phosphate, and lithium dihydrogen phosphate, or a combination thereof.

In some embodiments, the phosphorus source may be a phosphorus-containing material known in the art for preparing lithium manganese phosphate. For example, the phosphorus source may be selected from one of diammonium hydrogen phosphate, ammonium dihydrogen phosphate, ammonium phosphate, and phosphoric acid, or a combination thereof.

The addition amounts of the sources of elements A, B, C, D depend on the target doping amount, and the ratios of the amounts of lithium source, manganese source, and phosphorus source conform to stoichiometric proportions.

In some embodiments, the solvents in Step (1) and Step (2) may each independently be solvents routinely used by those skilled in the art in the preparation of manganese salts and lithium manganese phosphate. For example, the solvents may each be independently selected from at least one of ethanol, water (e.g., deionized water), and the like.

In some embodiments, the preparation method for the third positive electrode active material includes:

step of providing a core material: the chemical formula of the core chemical is $Li_{1+g}Mn_{1-h}E_hP_{1-i}R_iO_4$, where E, R, g, h, and i are as defined above;

first coating step: dissolving a source of element G, a phosphorus source, an acid, and optionally a lithium source, into a solvent to obtain a suspension for the first coating layer; and fully mixing the core material obtained in the step of providing the core material with the suspension for the first coating layer obtained in the first coating step, followed by drying and sintering to obtain a material coated with the first coating layer;

second coating step: dissolving a source of element X, a phosphorus source, and an acid into a solvent to obtain a suspension for the second coating layer; and fully mixing the material coated with the first coating layer obtained in the first coating step with the suspension for the second coating layer obtained in the second coating step, followed by drying and sintering to obtain a material coated with the two coating layers;

third coating step: fully dissolving a carbon source into a solvent to obtain a solution for the third coating layer; and then adding the material coated with the two coating layers obtained in the second coating step into the solution for the third coating layer, followed by uniformly mixing, drying, and sintering to obtain a material coated with the three coating layers.

One embodiment of the present application provides a secondary battery. The secondary battery includes the cell combination described above in the present application.

In some embodiments, the upper-limit voltage of the second cell during the 90th to 110th (e.g., 92, 95, 96, 97, 98, 100, or a range composed of any of the foregoing numerical values) charge-discharge cycles of the battery is greater than the upper-limit voltage of the second cell during the first charge-discharge cycle of the battery.

Therefore, the initial voltage of the battery is limited by the relatively low initial upper-limit voltage of the second cell while satisfying the required battery capacity, which enables the formation of a stable and dense SEI film within a relatively low voltage range, thereby prolonging the cycle life of the battery after the voltage range is later expanded.

[Positive Electrode Plate]

A positive electrode plate generally includes a positive electrode current collector and a positive electrode film layer disposed on at least one surface of the positive electrode current collector, and the positive electrode film layer includes a positive electrode active material.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver, a silver alloy, etc.) on a polymer material substrate (such as polypropylene (PP), polyethylene terephthalate (PET), polybutylene terephthalate (PBT), polystyrene (PS), and polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, a graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

[Negative Electrode Plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector can be formed by forming a metal material (copper, a copper alloy, nickel, a nickel alloy, titanium, a titanium alloy, silver, a silver alloy, etc.) on a polymer material substrate (such as polypropylene (PP), polyethylene terephthalate (PET), polybutylene terephthalate (PBT), polystyrene (PS), and polyethylene (PE)).

In some embodiments, a negative electrode active material for use in batteries known in the art may be used as the negative electrode active material. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the negative electrode film layer further optionally includes a binder. As an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes other auxiliary agents, such as a thickener (e.g., sodium carboxymethylcellulose (CMC-Na)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

[Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is liquid and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. As an example, the additive may include a negative electrode film-forming additive and a positive electrode film-forming additive, and may also include an additive capable of improving certain performance of the battery, such as an additive for improving the overcharge performance of the battery, an additive for improving the high- or low-temperature performance of the battery, or the like.

[Separator]

In some embodiments, the secondary battery further includes a separator. The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene difluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

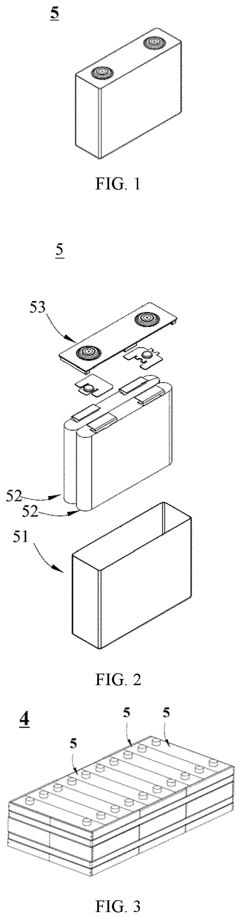

The present application does not particularly limit the shape of the secondary battery, and it may have a cylindrical shape, a prismatic shape, or any other shape. For example, FIG. 1 shows a secondary battery 5 having a prismatic structure as one example.

In some embodiments, referring to FIG. 2, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the secondary battery 5 may be one or more, and those skilled in the art can select the number according to specific and actual needs.

In some embodiments, the secondary battery may be assembled into a battery module. The number of secondary batteries included in the battery module may be one or more, and the specific number may be selected by those skilled in the art based on the use and capacity of the battery module.

FIG. 3 shows a battery module 4 as one example. Referring to FIG. 3, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

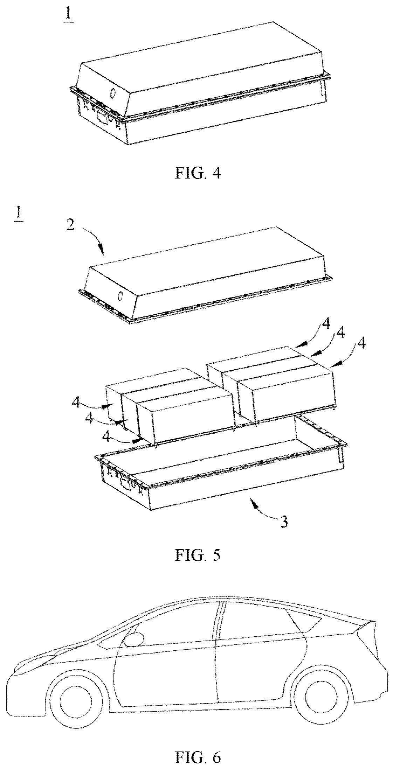

FIG. 4 and FIG. 5 show a battery pack 1 as one example. Referring to FIG. 4 and FIG. 5, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, the present application further provides an electric device. The electric device includes at least one of the secondary battery, the battery module, or the battery pack according to the present application. The secondary battery, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its usage requirements.

FIG. 6 shows an electric device as one example. The electric device is a pure electric vehicle, a hybrid electric vehicle, a plug-in hybrid electric vehicle, or the like. To satisfy the requirements of the electric device for high power and high energy density of the secondary battery, the battery pack or the battery module may be used.

[Examples]

Hereinafter, examples of the present application are described. The examples described below are illustrative and are merely used to explain the present application, and they should not be construed as limiting the present application. The embodiments without techniques or conditions specified therein are implemented according to techniques or conditions described in the literature in the art or according to product instructions. Reagents or instruments used herein without specified manufacturers are all commercially available conventional products.

**Example 1**

(I) Preparation of First Cell

(1) Preparation of first positive electrode active material:

Iron phosphate, lithium carbonate, and titanium oxide were used as raw materials and mixed in a stoichiometric molar ratio of $FePO_4$:$Li_2CO_3$:$TiO_2$ of 0.996:0.498:0.004. Glucose and polyethylene glycol, serving as the carbon source and the reducing agent, were added (the mass ratio of the glucose to the polyethylene glycol was 1:1, and the feeding amount of the carbon source accounted for 6% of the total mass of the raw materials). Later, water was added as a solvent for wet grinding, resulting in a mixed slurry. The obtained slurry was spray-dried, and then the dried product was placed into a roller furnace for sintering at 500 °C in an air isolated environment for 20 h. After natural cooling to a temperature less than 80 °C, the material was discharged to obtain a calcined material. The calcined material was crushed, sieved, and demagnetized to obtain the lithium iron phosphate substrate $LiFe_{0.998}Ti_{0.002}PO_4$, which was doped with about 0.3% of carbon element. The above substrate was then placed in a roller furnace under a nitrogen atmosphere, sprayed with an acetone solution, and sintered at a constant temperature of 600 °C for 10 h. After naturally cooling to a temperature less than 80 °C, the material was discharged, then crushed and sieved. Then, the processed material was placed back into the roller furnace, sprayed again with the acetone solution, and sintered at a constant temperature of 780 °C for another 10 h. After natural cooling to a temperature less than 80 °C, the material was discharged. The product from the second sintering was jet-milled to obtain carbon-coated $LiFe_{0.998}Ti_{0.002}PO_4$.

(2) Preparation of positive electrode plate:

The first positive electrode active material, a binder polyvinylidene fluoride (PVDF), and a conductive agent acetylene black were dissolved in a solvent N-methylpyrrolidone (NMP) in a mass ratio of 96:2:2, and the mixture was fully stirred and uniformly mixed to prepare a positive electrode slurry. A positive electrode current collector aluminum foil was evenly coated with the positive electrode slurry, and then drying, cold pressing, and cutting were performed to obtain a positive electrode plate.

(3) Preparation of negative electrode plate:

A negative electrode active material graphite, a conductive agent acetylene black, a binder styrene-butadiene rubber (SBR), and a thickener sodium carboxymethylcellulose (CMC-Na) were dissolved in deionized water in a mass ratio of 96:2:1:1, and the mixture was fully stirred and uniformly mixed to prepare a negative electrode slurry. A negative electrode current collector copper foil was evenly coated with the negative electrode slurry, and then drying, cold pressing, and cutting were performed to obtain a negative electrode plate.

(4) Separator: A polypropylene film was used.

(5) Preparation of first cell:

The above positive electrode plate, separator, and negative electrode plate were sequentially stacked and wound to obtain a first cell. The capacity $C_A$ across the widest applicable voltage range throughout the entire life cycle of the first cell was designed to be 100 Ah.

(II) Preparation of Second Cell

(1) Preparation of second positive electrode active material:

$NiSO_4$, $CoSO_4$, and $MnSO_4$ were dissolved in water in a molar ratio of 0.55:0.141:0.249 to prepare a mixed solution, where the concentration of $NiSO_4$ in the mixed solution was 2 mol/L. A 5 mol/L NaOH solution was prepared.
50 L of mixed solution was introduced into a reaction kettle, and then 50 L of NaOH solution and an appropriate amount of 0.5 mol/L ammonia solution were introduced into the reaction kettle to adjust the pH value in the reaction kettle to be 9.0 to 12.0. The reaction proceeded at a temperature of 40 °C to 80 °C for 60 h under stirring at 300 r/min to 1000 r/min. Upon completion of the reaction, the precipitate was filtered and washed, and the washed precipitate was dried at 120 °C under vacuum for 24 h to obtain a precursor.
$Li_2CO_3$, the precursor, $Al_2O_3$, and MgO were mixed, where the molar ratio of $Li_2CO_3$ (based on the molar weight of the element Li), the precursor (based on the total molar weight of the elements Ni, Co, and Mn in the mixed solution), $Al_2O_3$ (based on the molar weight of the element Al), and MgO was 1.05:0.94:0.04:0.02. The mixture was placed into a ball mill tank and milled at 300 r/s for 2 h. Then, the milled mixture was transferred to a box furnace and pre-sintered at 950 °C for 12 h under an air atmosphere of 0.2 MPa, with a heating rate of 1 °C/min, followed by cooling to 600 °C at a rate of 1 °C/min and sintering at this temperature for 8 h. After sintering, the material was cooled to 300 °C at a rate of 1 °C/min, followed by natural cooling to room temperature. The material was then crushed using a jet mill at a speed of 3000 r/min and an air flow rate of 500 $m^3$/h for 0.5 h, and sieved through a 500-mesh sieve to obtain a second positive electrode active material $LiNi_{0.55}Co_{0.141}Mn_{0.249}Al_{0.04}Mg_{0.02}O_2$.

(2) Preparation of positive electrode plate:

The second positive electrode active material, a binder polyvinylidene fluoride (PVDF), and a conductive agent acetylene black were dissolved in a solvent N-methylpyrrolidone (NMP) in a mass ratio of 96:2:2, and the mixture was fully stirred and uniformly mixed to prepare a positive electrode slurry. A positive electrode current collector aluminum foil was evenly coated with the positive electrode slurry, and then drying, cold pressing, and cutting were performed to obtain a positive electrode plate.

(3) Preparation of negative electrode plate:

A negative electrode active material graphite, a conductive agent acetylene black, a binder styrene-butadiene rubber (SBR), and a thickener sodium carboxymethylcellulose (CMC-Na) were dissolved in deionized water in a mass ratio of 96:2:1:1, and the mixture was fully stirred and uniformly mixed to prepare a negative electrode slurry. A negative electrode current collector copper foil was evenly coated with the negative electrode slurry, and then drying, cold pressing, and cutting were performed to obtain a negative electrode plate.

(4) Separator: A polypropylene film was used.

(5) Preparation of second cell:

The above positive electrode plate, separator, and negative electrode plate were sequentially stacked and wound to obtain a second cell. The capacity $C_B$ across the widest applicable voltage range throughout the entire life cycle of the second cell was designed to be 100 Ah.

(III) Preparation of Electrolytic Solution:

Ethylene carbonate (EC), ethyl methyl carbonate (EMC), and diethyl carbonate (DEC) were mixed in a volume ratio of 1:1:1, and then $LiPF_6$ was uniformly dissolved in the solution to obtain an electrolytic solution. The concentration of $LiPF_6$ in the electrolytic solution was 1 mol/L.

(IV) Preparation of Secondary Battery:

Three first cells and two second cells were assembled into an electrode assembly. The electrode assembly was placed into a housing, and the prepared electrolytic solution was added. After processes such as packaging, resting, formation, and aging, a secondary battery was obtained.

The secondary batteries of Examples 2 to 24 and Comparative Examples 1 to 3 were prepared using a method similar to that of Example 1. The different product parameters are detailed in Table 1.

$NP_{A1}$ and $NP_{A2}$ were adjusted by changing the ratio of the coating mass of the positive electrode slurry on the positive electrode current collector to the coating mass of the negative electrode slurry on the negative electrode current collector in the first cell.

$NP_{B1}$ and $NP_{B2}$ were adjusted by changing the ratio of the coating mass of the positive electrode slurry on the positive electrode current collector to the coating mass of the negative electrode slurry on the negative electrode current collector in the second cell.

Different housing sizes were used to meet the design requirements of the capacity $C_A$ or $C_B$ across the widest applicable voltage range throughout the entire life cycle of the first cell or the second cell.

Five first cells were used in Comparative Example 3. The first positive electrode active materials of Examples 2 to 24 and Comparative Examples 1 to 3 were all carbon-coated core materials.

## Preparation Method for First Positive Electrode Active Material of Example 24

Step S1: preparation of co-doped manganese oxalate

689.6 g of manganese carbonate, 455.3 g of ferrous carbonate, 4.7 g of cobalt sulfate, and 4.7 g of vanadium(II) chloride were added to a mixer and fully mixed for 6 h. The obtained mixture was then transferred into a reaction kettle, and 5 L of deionized water and 1260.6 g of oxalic acid dihydrate were added. The resulting mixture was heated to 80 °C, fully stirred at a rotation speed of 500 rpm for 6 h, and uniformly mixed until the reaction was terminated and no bubbles were generated to obtain a manganese oxalate suspension co-doped with Fe, Co, and V. Then, the suspension was filtered, dried at 120 °C, and sand-milled to obtain manganese oxalate particles with a particle size of 100 nm.

Step S2: preparation of core

1793.1 g of prepared manganese oxalate, 369.8g of lithium carbonate, 1148.9 g of ammonium dihydrogen phosphate, and 0.8 g of metasilicic acid were added into 20 L of deionized water. The mixture was fully stirred and uniformly mixed for reaction at 80 °C for 10 h to obtain a slurry. The slurry was transferred to a spray drying device for spray drying and granulation, and dried at a temperature of 250 °C to obtain a powder. The powder was sintered in a roller kiln at 700 °C for 4 h under a protective atmosphere (90% nitrogen and 10% hydrogen) to obtain carbon-coated $Li_{1.001}Mn_{0.60}Fe_{0.393}V_{0.004}Co_{0.003}P_{0.999}Si_{0.001}O_4$.

**Preparation Method for Third Positive Electrode Active Material of Examples 8 to 12 and Example 21**

**Step S1: preparation of manganese oxalate co-doped with Fe, Co, V, and S**

689.6 g of manganese carbonate, 455.3g of ferrous carbonate, 4.7 g of cobalt sulfate, and 4.9 g of vanadium(II) chloride were added to a mixer and fully mixed for 6 h. The obtained mixture was then transferred into a reaction kettle, and 5 L of deionized water and 1260.6 g of oxalic acid dihydrate were added. The resulting mixture was heated to 80 °C, fully stirred at a rotation speed of 500 rpm for 6 h, and well mixed until the reaction was terminated and no bubbles were generated to obtain a manganese oxalate suspension co-doped with Fe, Co, and V. Then, the suspension was filtered, dried at 120 °C, and sand-milled to obtain manganese oxalate particles with a particle size of 100 nm.

**Step S2: preparation of core**

1793.1 g of manganese oxalate prepared in Step (1), 369.8 g of lithium carbonate, 1148.9 g of ammonium dihydrogen phosphate, and 0.8 g of metasilicic acid were added into 20 L of deionized water. The mixture was fully stirred and uniformly mixed for reaction at 80 °C for 10 h to obtain a slurry. The slurry was transferred to a spray drying device for spray drying and granulation, and dried at a temperature of 250 °C to obtain a powder. The powder was sintered in a roller kiln at 700 °C for 4 h under a protective atmosphere (90% nitrogen and 10% hydrogen) to obtain a core material. The element content of the core material was detected by inductively coupled plasma optical emission spectrometer (ICP), and then a core was obtained.

**Step S3: preparation of suspension for first coating layer**

Preparation of $Li_2FeP_2O_7$ solution: 7.4 g of lithium carbonate, 11.6 g of ferrous carbonate, 23.0 g of ammonium dihydrogen phosphate, and 12.6 g of oxalic acid dihydrate were dissolved in 500 mL of deionized water. The pH was adjusted to 5, and the mixture was stirred and reacted at room temperature for 2 h to obtain a solution. Then, the solution was heated to 80 °C and maintained at this temperature for 4 h to obtain a suspension for the first coating layer.

**Step S4: coating of the first coating layer**

1571.9 g of the doped lithium manganese phosphate core material obtained in Step S2 was added into the suspension for the first coating layer (containing 15.7 g of coating substance) obtained in Step S3. The mixture was fully stirred and uniformly mixed for 6 h. After uniform mixing, the mixture was transferred into an oven and dried at 120 °C for 6 h, and then sintered at 650 °C for 6 h to obtain a material coated with a pyrophosphate coating.

**Step S5: preparation of suspension for second coating layer**

3.7 g of lithium carbonate, 11.6 g of ferrous carbonate, 11.5 g of ammonium dihydrogen phosphate, and 12.6 g of oxalic acid dihydrate were dissolved in 1500 mL of deionized water, and the mixture was stirred and reacted for 6 h to obtain a solution. Then, the solution was heated to 120 °C and maintained at this temperature for 6 h to obtain a suspension for the second coating layer.

**Step S6: coating of second coating layer**

1586.8 g of the material coated with a pyrophosphate coating obtained in Step S4 was added into the suspension for the second coating layer (containing 47.1 g of coating substance) obtained in Step S5. The mixture was fully stirred and uniformly mixed for 6 h. After uniform mixing, the mixture was transferred into an oven and dried at 120 °C for 6 h, and then sintered at 700 °C for 8 h to obtain a material coated with a double-layer coating.

### Step S7: preparation of aqueous solution for third coating layer

37.3 g of sucrose was dissolved in 500 g of deionized water. The mixture was then stirred for thorough dissolution to obtain a sucrose aqueous solution.

### Step S8: coating of third coating layer

1633.9 g of the material coated with a double-layer coating obtained in Step S6 was added into the sucrose solution obtained in Step S7. The mixture was stirred and mixed for 6 h. After uniform mixing, the mixture was transferred into an oven and dried at 150 °C for 6 h, and then sintered at 700 °C for 10 h to obtain a third positive electrode active material coated with a three-layer coating.

Table 1: Parameter results of Examples 1 to 24 and Comparative Examples 1 to 3

| Number | First cell | | | | Second cell | | | | | | | | | | | | CB/ CA | Condition ① satisfied or not | Conditio n ② satisfied or not | (1.1- $NP_{A1}$)/ ($NP_{B1}$-1) |
|---|---|---|---|---|---|---|---|---|---|---|---|---|---|---|---|---|---|---|---|---|
| | First positive electrode active material | NPA1 | NPA2 | CA (Ah) | Voltage change a (mV) | Second positive electrode active material | Third positive electrode active material | | | | Mass content c of second positive electrode active material | NPB1 | NPB2 | CB (Ah) | Voltage change b (mV) | Upper-limit voltage increased or not | | | | |
| | Core | | | | | | Core | First coating layer | Second coating layer | Third coating layer | | | | | | | | | | |
| Example 1 | $LiFe_{0.998}Ti_{0.002}PO_4$ | 0.70 | 0.78 | 100 | 0.2 | $LiNi_{0.55}Co_{0.141}Mn_{0.249}Al_{0.04}Mg_{0.02}O_2$ | / | / | / | / | 100% | 1.10 | 1.27 | 100.0 | 13.64 | No | 1.0 | Yes | Yes | 4.00 |
| Example 2 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | / | / | / | / | 100% | 1.10 | 1.27 | 100.0 | 13.64 | No | 1.0 | Yes | Yes | 3.00 |
| Example 3 | $LiFe_{0.998}Ti_{0.002}PO_4$ | 0.90 | 1.01 | 100 | 0.4 | $LiNi_{0.55}Co_{0.141}Mn_{0.249}Al_{0.04}Mg_{0.02}O_2$ | / | / | / | / | 100% | 1.10 | 1.27 | 100.0 | 13.64 | No | 1.0 | Yes | Yes | 2.00 |
| Example 4 | $LiFe_{0.998}Ti_{0.002}PO_4$ | 0.95 | 1.06 | 100 | 1.4 | $LiNi_{0.55}Co_{0.141}Mn_{0.249}Al_{0.04}Mg_{0.02}O_2$ | / | / | / | / | 100% | 1.10 | 1.27 | 100.0 | 13.64 | No | 1.0 | Yes | Yes | 1.50 |
| Example 5 | $LiFe_{0.998}Ti_{0.002}PO_4$ | 1.00 | 1.12 | 100 | 54.6 | $LiNi_{0.55}Co_{0.141}Mn_{0.249}Al_{0.04}Mg_{0.02}O_2$ | / | / | / | / | 100% | 1.10 | 1.27 | 100.0 | 13.64 | No | 1.0 | No | Yes | 1.00 |
| Example 6 | $LiFe_{0.998}Ti_{0.002}PO_4$ | 1.00 | 1.12 | 100 | 54.6 | $LiNi_{0.55}Co_{0.141}Mn_{0.249}Al_{0.04}Mg_{0.02}O_2$ | / | / | / | / | 100% | 1.05 | 1.21 | 100.0 | 14.53 | No | 1.0 | No | Yes | 2.00 |
| Example 7 | $LiFe_{0.998}Ti_{0.002}PO_4$ | 1.00 | 1.12 | 100 | 54.6 | $LiNi_{0.55}Co_{0.141}Mn_{0.249}Al_{0.04}Mg_{0.02}O_2$ | / | / | / | / | 100% | 1.02 | 1.17 | 100.0 | 15.68 | No | 1.0 | No | Yes | 5.00 |
| Example 8 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | $Li_{1.01}Mn_{0.60}Fe_{0.393}V_{0.004}Co_{0.003}P_{0.999}Si_{0.001}O_4$ | 1% $Li_2FeP_2O_7$ | 2.50% $LiFePO_4$ | 1.5% carbon | 5% | 1.10 | 1.27 | 100.0 | 13.64 | No | 1.0 | Yes | Yes | 3.00 |
| Example 9 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | $Li_{1.01}Mn_{0.60}Fe_{0.393}V_{0.004}Co_{0.003}P_{0.999}Si_{0.001}O_4$ | 1% $Li_2FeP_2O_7$ | 2.50% $LiFePO_4$ | 1.5% carbon | 40% | 1.10 | 1.27 | 100.0 | 13.64 | No | 1.0 | Yes | Yes | 3.00 |
| Example 10 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | $Li_{1.01}Mn_{0.60}Fe_{0.393}V_{0.004}Co_{0.003}P_{0.999}Si_{0.001}O_4$ | 1% $Li_2FeP_2O_7$ | 2.50% $LiFePO_4$ | 1.5% carbon | 50% | 1.10 | 1.27 | 100.0 | 13.64 | No | 1.0 | Yes | Yes | 3.00 |
| Example 11 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | $Li_{1.01}Mn_{0.60}Fe_{0.393}V_{0.004}Co_{0.003}P_{0.999}Si_{0.001}O_4$ | 1% $Li_2FeP_2O_7$ | 2.50% $LiFePO_4$ | 1.5% carbon | 80% | 1.10 | 1.27 | 100.0 | 13.64 | No | 1.0 | Yes | Yes | 3.00 |
| Example 12 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | $Li_{1.01}Mn_{0.60}Fe_{0.393}V_{0.004}Co_{0.003}P_{0.999}Si_{0.001}O_4$ | 1% $Li_2FeP_2O_7$ | 2.50% $LiFePO_4$ | 1.5% carbon | 95% | 1.10 | 1.27 | 100.0 | 13.64 | No | 1.0 | Yes | Yes | 3.00 |
| Example 13 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | / | / | / | / | 100% | 1.10 | 1.27 | 100.0 | 13.64 | No | 1.0 | Yes | Yes | 3.00 |
| Example 14 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | / | / | / | / | 100% | 1.10 | 1.27 | 110.0 | 13.64 | No | 1.1 | Yes | Yes | 3.00 |
| Example 15 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | / | / | / | / | 100% | 1.10 | 1.27 | 120.0 | 13.64 | No | 1.2 | Yes | Yes | 3.00 |
| Example 16 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | / | / | / | / | 100% | 1.10 | 1.27 | 130.0 | 13.64 | No | 1.3 | Yes | Yes | 3.00 |
| Example 17 | $LiFe_{0.998}Ti_{0.002}PO_4$ | 1.00 | 1.12 | 100 | 54.6 | $LiNi_{0.55}Co_{0.141}Mn_{0.249}Al_{0.04}Mg_{0.02}O_2$ | / | / | / | / | 100% | 2.00 | 2.30 | 100.0 | 11.84 | No | 1.0 | No | Yes | 0.10 |
| Example 18 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | / | / | / | / | 100% | 1.02 | 1.17 | 100.0 | 13.64 | No | 1.0 | Yes | Yes | 15.00 |
| Example 19 | $LiFe_{0.998}Ti_{0.002}PO_4$ | 0.70 | 0.78 | 100 | 0.2 | $LiNi_{0.55}Co_{0.141}Mn_{0.249}Al_{0.04}Mg_{0.02}O_2$ | / | / | / | / | 100% | 1.02 | 1.17 | 100.0 | 13.64 | No | 1.0 | Yes | Yes | 20.00 |

16

| | | | | | | | | | | | | | | | | | | | |
|---|---|---|---|---|---|---|---|---|---|---|---|---|---|---|---|---|---|---|---|
| Example 20 | $LiFe_{0.998}Ti_{0.002}PO_4$ | 1.00 | 1.12 | 100 | 54.6 | $LiNi_{0.55}Co_{0.141}Mn_{0.249}Al_{0.04}Mg_{0.02}O_2$ | / | / | / | / | 100% | 2.20 | 2.53 | 100.0 | 10.84 | No | 1.0 | No | Yes | 0.08 |
| Example 21 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | $Li_{1.001}Mn_{0.60}Fe_{0.393}V_{0.004}Co_{0.003}P_{0.999}Si_{0.001}O_4$ | 1% $Li_2FeP_2O_7$ | 2.50% $LiFePO_4$ | 1.5% carbon | 50% | 1.10 | 1.27 | 95.0 | 13.64 | No | 0.95 | Yes | Yes | 3.00 |
| Example 22 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | / | / | / | / | 100% | 1.10 | 1.27 | 140.0 | 13.64 | No | 1.4 | Yes | Yes | 3.00 |
| Example 23 | $LiFe_{0.998}Ti_{0.002}PO_4$ | 0.80 | 0.90 | 100 | 0.2 | $LiNi_{0.55}Co_{0.141}Mn_{0.249}Al_{0.04}Mg_{0.02}O_2$ | / | / | / | / | 100% | 1.10 | 1.27 | 120.0 | 18.43 | Yes | 1.2 | Yes | Yes | 3.00 |
| Example 24 | $Li_{1.001}Mn_{0.60}Fe_{0.393}V_{0.004}Co_{0.003}P_{0.999}Si_{0.001}O_4$ | 0.90 | 1.01 | 100 | 0.8 | $LiNi_{0.55}Co_{0.141}Mn_{0.249}Al_{0.04}Mg_{0.02}O_2$ | / | / | / | / | 100% | 1.10 | 1.27 | 100.0 | 13.64 | No | 1.0 | Yes | Yes | 2.00 |
| Comparative Example 1 | $LiFe_{0.998}Ti_{0.002}PO_4$ | 0.65 | 0.73 | 100 | 0.2 | $LiNi_{0.55}Co_{0.141}Mn_{0.249}Al_{0.04}Mg_{0.02}O_2$ | / | / | / | / | 100% | 1.02 | 1.17 | 100.0 | 15.68 | No | 1.0 | No | No | 22.50 |
| Comparative Example 2 | $LiFe_{0.998}Ti_{0.002}PO_4$ | 1.10 | 1.23 | 100 | 64.6 | $LiNi_{0.55}Co_{0.141}Mn_{0.249}Al_{0.04}Mg_{0.02}O_2$ | / | / | / | / | 100% | 1.10 | 1.27 | 100.0 | 13.64 | No | 1.0 | No | No | 0.00 |
| Comparative Example 3 | $LiFe_{0.998}Ti_{0.002}PO_4$ | 0.90 | 1.01 | 100 | 0.4 | / | / | / | / | / | / | / | / | / | / | / | / | / | / | / |

a: the corresponding voltage change of the first cell for each 1% change in the SOC of the single-cell battery when the SOC of the single-cell battery including the first cell is within a range of 95% to 100%;

b: the corresponding voltage change of the second cell for each 1% change in the SOC of the single-cell battery when the SOC of the single-cell battery including the second cell is within a range of 95% to 100%;

c: the mass proportion of the second positive electrode active material in the first and second positive electrode active materials;

Condition ①: $0.7 \leq NPA1 \leq 1.05\ NPB1$, and $NPA1 < 1$;

Condition ②: $0.75 \leq NPA2 \leq 1.05\ NPB2$, and $NPA2 < 1.2$.

**Battery Test**

(1) Test of the voltage change value of the first cell or the second cell for each 1% change in the SOC of the single-cell battery when the SOC of the single-cell battery is within a range of 95% to 100%:
The first cell or the second cell was assembled into a single-cell battery according to the item (IV) above.

Test of single-cell battery including the first cell: Under a constant temperature environment of 25 °C, the battery was rested for 10 min and discharged to the cut-off voltage of 2.8 V at a constant current of 0.1C. Then, the battery was rested for another 10 min and charged to the target voltage of 3.65 V at a constant current of 0.04C. After resting for 10 min, the battery was discharged to the cut-off voltage of 2.8 V at a constant current of 0.04C, and then rested again for 10 min and charged to the target voltage of 3.65 V at a constant current of 0.04C. The charge capacity at this point was recorded as 100% SOC. After resting for another 10 min, the battery was discharged to the cut-off voltage of 2.8 V at a constant current of 0.04C. A graph was plotted with the charge capacity of the final charging process as the y-axis and the voltage as the x-axis. The voltage Vm corresponding to 95% SOC and the voltage Vn corresponding to 100% SOC were derived from the graph. Thus, when the SOC of the battery was within the range of 95% to 100%, the voltage change value of the first cell for each 1% change in the SOC of the battery was calculated as $(Vn1 - Vm1)/5$. The target voltage used for the first cell of Example 24 was 4.25 V.

Test of single-cell battery including the second cell: Under a constant temperature environment of 25 °C, the battery was rested for 10 min and discharged to the cut-off voltage of 2.8 V at a constant current of 0.1C. Then, the battery was rested for another 10 min and charged to the target voltage of 4.25V at a constant current of 0.04C. After resting for 10 min, the battery was discharged to the cut-off voltage of 2.8 V at a constant current of 0.04C, and then rested again for 10 min and charged to the target voltage of 4.25V at a constant current of 0.04C. The charge capacity at this point was recorded as 100% SOC. After resting for another 10 min, the battery was discharged to the cut-off voltage of 2.8 V at a constant current of 0.04C. A graph was plotted with the charge capacity of the final charging process as the y-axis and the voltage as the x-axis. The voltage Vm corresponding to 95% SOC and the voltage Vn corresponding to 100% SOC were derived from the graph. Thus, when the SOC of the battery was within the range of 95% to 100%, the voltage change value of the second cell for each 1% change in the SOC of the battery was calculated as $(Vn2 - Vm2)/5$.

(2) Test of lithium deintercalation specific capacity of positive electrode plate and lithium intercalation specific capacity of negative electrode plate:

The positive electrode plate and the negative electrode plate were each assembled with the counter electrode lithium foil into a button battery.
Test of button battery including the positive electrode plate: Under a constant temperature environment of 25 °C, the battery was charged to 4.35 V at a constant current of 0.1C, and then discharged to 2.8 V at 0.1C. The discharge capacity of the first cycle was recorded, and the discharge capacity of the first cycle was divided by the mass of the positive electrode active material in the positive electrode plate to obtain the first lithium deintercalation specific capacity of the positive electrode plate. Then, the button battery was subjected to two additional charge-discharge cycles using the same method, making a total of three cycles. The charge-discharge capacity of the second cycle was recorded as the non-first-cycle discharge capacity, and the non-first-cycle discharge capacity was divided by the mass of the positive electrode active material in the positive electrode plate to obtain the non-first lithium deintercalation specific capacity of the positive electrode plate.
Test of button battery including the negative electrode plate: Under a constant temperature environment of 25 °C, the battery was charged to 2.0 V at a constant current of 0.1C, and then discharged to 0 V at 0.1C. The discharge capacity of the first cycle was recorded, and the discharge capacity of the first cycle was divided by the mass of the negative electrode active material in the negative electrode plate to obtain the first lithium intercalation specific capacity of the negative electrode plate. Then, the button battery was subjected to two additional charge-discharge cycles using the same method, making a total of three cycles. The charge-discharge capacity of the second cycle was recorded as the non-first-cycle discharge capacity, and the non-first-cycle discharge capacity was divided by the mass of the negative electrode active material in the negative electrode plate to obtain the non-first lithium intercalation specific capacity of the negative electrode plate.

(3) Determining whether the upper-limit voltage of the second cell is increased:

Under a constant temperature environment of 25 °C, the battery was discharged to a lower-limit cut-off voltage of 2.8 V at 0.33C. After resting for 10 min, the battery was charged to an upper-limit cut-off voltage of 5 V at a constant current of 0.33C, followed by constant voltage charging until the current was ≤ 0.05C. The obtained charge capacity was recorded as the nominal capacity. The voltage data of the second cell was monitored during the charging process to obtain the upper-limit voltage of the second cell corresponding to the nominal capacity. A total of 100 discharge-charge cycles were performed according to the above method. During the charging process of the final cycle, the voltage data of the second cell was monitored to obtain the upper-limit voltage of the second cell in the final cycle. If the upper-limit voltage of the second cell in the last cycle minus the upper-limit voltage of the second cell corresponding to the nominal capacity is greater than 0.05 V, it is determined that the upper-limit voltage of the second cell has increased; otherwise, it is determined that the upper-limit voltage of the second cell has not increased.

(4) Overcharge protection test:

Under a constant temperature environment of 25 °C, the battery was charged to the upper-limit cut-off voltage at 0.1C and then discharged to the lower-limit cut-off voltage at 0.33C. The numerical values of the upper-limit cut-off voltage and the lower-limit cut-off voltage are shown in Table 2. A total of 200 charging-discharge cycles were performed according to the above method, and the battery was disassembled. If the lithium plating area (excluding corner positions) on the negative electrode plate accounts for more than 1/5 of the total area of the negative electrode plate, the battery is determined to have failed the overcharge protection test and recorded as NG; otherwise, the battery is determined to have passed the overcharge protection test and recorded as OK.

(5) Test of cycle life:

Under a constant temperature environment of 25 °C, the battery was rested for 10 min and discharged to 2.8 V at 0.33C. Then, the battery was rested for another 10 min and charged to 4.3 V at a constant current of 0.1C, followed by constant voltage charging until the current was ≤ 0.05C. After resting for 10 min, the battery was discharged to 2.8 V at 0.33C. The discharge capacity of the first cycle of the battery was recorded as $D_1$. The charge-discharge operation described above was repeated, and the discharge capacity of each cycle was recorded as $D_n$ (n = 2, 3...). The state of health (SOH) of the cell was calculated according to the following formula, and the number of cycles n when the state of health reached 90% SOH was recorded.

$$\text{State of health of cell} = 100\% \times {}_n/D_3.$$

Table 2: Performance test results of Examples 1 to 24 and Comparative Examples 1 to 3

| Number | Battery pack test range | | Overcharge protection test result | Cycle life 25 °C, 90% SOH |
| | Lower-limit cut-off voltage | Upper-limit cut-off voltage | | |
| | Unit: V | Unit: V | | |
|---|---|---|---|---|
| Example 1 | 14.000 | 19.474 | OK | 900 |
| Example 2 | 14.000 | 19.478 | OK | 920 |
| Example 3 | 14.000 | 19.488 | OK | 1000 |
| Example 4 | 14.000 | 19.502 | OK | 960 |
| Example 5 | 14.000 | 20.050 | OK | 780 |
| Example 6 | 14.000 | 20.050 | OK | 770 |
| Example 7 | 14.000 | 20.050 | OK | 750 |
| Example 8 | 14.000 | 19.478 | OK | 1150 |
| Example 9 | 14.000 | 19.478 | OK | 1150 |
| Example 10 | 14.000 | 19.478 | OK | 1200 |
| Example 11 | 14.000 | 19.478 | OK | 1050 |
| Example 12 | 14.000 | 19.478 | OK | 920 |
| Example 13 | 14.000 | 19.478 | OK | 920 |

(continued)

| Number | Battery pack test range | | Overcharge protection test result | Cycle life 25 °C, 90% SOH |
|---|---|---|---|---|
| | Lower-limit cut-off voltage | Upper-limit cut-off voltage | | |
| | Unit: V | Unit: V | | |
| Example 14 | 14.000 | 19.478 | OK | 1050 |
| Example 15 | 14.000 | 19.478 | OK | 1150 |
| Example 16 | 14.000 | 19.478 | OK | 1200 |
| Example 17 | 14.000 | 19.478 | OK | 760 |
| Example 18 | 14.000 | 19.478 | OK | 790 |
| Example 19 | 14.000 | 19.474 | OK | 820 |
| Example 20 | 14.000 | 19.478 | OK | 660 |
| Example 21 | 14.000 | 19.478 | OK | 530 |
| Example 22 | 14.000 | 19.478 | OK | 710 |
| Example 23 | 14.000 | 19.478 | OK | 1230 |
| Example 24 | 14.000 | 21.250 | OK | 1020 |
| Comparative Example 1 | 14.000 | 19.478 | NG | 400 |
| Comparative Example 2 | 14.000 | 19.478 | OK | 450 |
| Comparative Example 3 | 14.000 | 19.478 | NG | 120 |

According to the results described above, it can be seen that:

Compared with Comparative Examples 1 to 3, the batteries of Examples 1 to 24 of the present application exhibit higher safety level and longer cycle life.

Compared with Examples 5 to 7, 17, and 19 to 22, the batteries of Examples 1 to 4, 8 to 16, and 23 to 24 of the present application exhibit longer cycle life.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Claims**

1.  A cell combination, comprising a first cell and a second cell, wherein a number of the first cell is greater than or equal to a number of the second cell, and the first cell and the second cell both comprise a positive electrode plate and a negative electrode plate;

    and the cell combination satisfies:

    $$0.7 \leq NP_{A1} \leq 1.05 \, NP_{B1} \text{ and } NP_{A1} < 1, \text{ or } 0.75 \leq NP_{A2} \leq 1.05 \, NP_{B2} \text{ and } NP_{A2} < 1.2;$$

    wherein the $NP_{A1}$ is a ratio of a first lithium intercalation specific capacity of the negative electrode plate to a first lithium deintercalation specific capacity of the positive electrode plate in the first cell; the $NP_{B1}$ is a ratio of a first lithium intercalation specific capacity of the negative electrode plate to a first lithium deintercalation specific

20

capacity of the positive electrode plate in the second cell; the $NP_{A2}$ is a ratio of a non-first lithium intercalation specific capacity of the negative electrode plate to a non-first lithium deintercalation specific capacity of the positive electrode plate in the first cell, and the $NP_{B2}$ is a ratio of a non-first lithium intercalation specific capacity of the negative electrode plate to a non-first lithium deintercalation specific capacity of the positive electrode plate in the second cell;

when a state of charge (SOC) of a single-cell battery comprising the second cell is within a range of 95% to 100%, a voltage change of the second cell is correspondingly greater than 5 mV for each 1% change in the SOC of the single-cell battery.

2. The cell combination according to claim 1, wherein when the SOC of the single-cell battery comprising the first cell is within a range of 95% to 100%, a voltage change of the first cell is correspondingly less than or equal to 5 mV for each 1% change in the SOC of the single-cell battery.

3. The cell combination according to claim 1 or 2, wherein the cell combination satisfies:

$$0.08 \leq (1.1 - NP_{A1})/(NP_{B1} - 1) \leq 20;$$

preferably,

$$0.1 \leq (1.1 - NP_{A1})/(NP_{B1} - 1) \leq 15.$$

4. The cell combination according to any one of claims 1 to 3, wherein the cell combination satisfies:

$$0.95 \leq C_B/C_A \leq 1.4, \text{ optionally } 1.0 \leq C_B/C_A \leq 1.3,$$

wherein $C_A$ is a capacity across the widest applicable voltage range throughout the entire life cycle of the first cell, and $C_B$ is a capacity across the widest applicable voltage range throughout the entire life cycle of the second cell.

5. The cell combination according to any one of claims 1 to 4, wherein the positive electrode plate in the first cell comprises a first positive electrode active material, and the first positive electrode active material contains a compound $Li_aA_xMn_{1-y}B_yP_{1-z}C_zO_{4-n}D_n$,

wherein the A comprises one or more elements of Zn, Al, Na, K, Mg, Nb, Mo, and W; the B comprises one or more elements of Ti, V, Zr, Fe, Ni, Mg, Co, Ga, Sn, Sb, Nb, and Ge; the C comprises one or more elements of B (boron), S, Si, and N; the D comprises one or more elements of S, F, Cl, and Br; the a is 0.85 to 1.15; the x is 0 to 0.1; the y is 0.001 to 1; the z is 0 to 0.5; the n is 0 to 0.5.

6. The cell combination according to claim 5, wherein the first positive electrode active material comprises a core and a coating layer coating the core, wherein the core contains the compound $Li_aA_xMn_{1-y}B_yP_{1-z}C_zO_{4-n}D_n$, and the coating layer contains a carbon element.

7. The cell combination according to any one of claims 1 to 6, wherein the positive electrode plate in the second cell comprises a second positive electrode active material, and the second positive electrode active material contains a compound $LiNi_bCo_dMn_eM_fO_2$,

wherein the M comprises one or more elements of Mn, Al, Mg, Ca, Na, Ti, W, Zr, Sr, Cr, Zn, Ba, B, S, and Y, and optionally comprises an element Mg and/or an element Al; the b is 0.314 to 0.970; the d is 0 to 0.320, optionally 0.047 to 0.320; the e is 0.006 to 0.390; in addition, the sum of the b, d, e, and f is 1, and the f is greater than 0.

8. The cell combination according to claim 7, wherein the positive electrode plate in the second cell further comprises a third positive electrode active material; the third positive electrode active material comprises a core and a shell coating the core, and the shell comprises a first coating layer coating the core, a second coating layer coating the first coating layer, and a third coating layer coating the second coating layer; the core contains a compound $Li_{1+g}Mn_{1-h}E_hP_{1-i}R_iO_4$, the first coating layer contains crystalline pyrophosphate $Li_jGP_2O_7$ and/or $G_k(P_2O_7)_r$, the second coating layer contains crystalline phosphate $X_tPO_4$, and the third coating layer contains the carbon element,

wherein the E comprises one or more elements of Zn, Al, Na, K, Mg, Mo, W, Ti, V, Zr, Fe, Ni, Co, Ga, Sn, Sb, Nb, and Ge, and optionally comprises one or more elements of Fe, V, Ni, and Co; the R comprises one or more elements of B, Si, N, and S, and optionally comprises one or more elements of Si, N, and S; each G in the crystalline pyrophosphate

$Li_jGP_2O_7$ and $G_k(P_2O_7)_r$ independently comprises one or more elements of Fe, Ni, Mg, Co, Cu, Zn, Ti, Ag, Zr, Nb, and Al, and optionally comprises one or more elements of Fe, Co, Ti, and Al; the X comprises one or more elements of Li, Fe, Ni, Mg, Co, Cu, Zn, Ti, Ag, Zr, Nb, and Al, and optionally comprises one or more elements of Li, Fe, Ag, and Al; the g is -0.100 to 0.100; the h is 0.001 to 0.600; the i is 0.001 to 0.100; the j is greater than 0 and less than or equal to 2; the k is 1 to 4; the r is 1 to 3; the t is greater than 0 and less than or equal to 2.

9. The cell combination according to claim 7 or 8, wherein in the positive electrode plate of the second cell, a proportion of a mass of the second positive electrode active material in a total mass of the second positive electrode active material and the third positive electrode active material is 5% to 100%, optionally 5% to 95%.

10. A battery, comprising the cell combination according to any one of claims 1 to 9.

11. The battery according to claim 10, wherein an upper-limit voltage of the second cell during the 90th to 110th charge-discharge cycles of the battery is greater than an upper-limit voltage of the second cell during the first charge-discharge cycle of the battery.

12. An electric device, comprising the battery according to claim 10 or 11.

**5**

FIG. 1

**5**

53

52
52

51

FIG. 2

**4** **5** **5**

**5**

FIG. 3

FIG. 4

FIG. 5

FIG. 6

| | | |
|---|---|---|
| **INTERNATIONAL SEARCH REPORT** | | International application No. |
| | | **PCT/CN2023/091222** |

| A. | CLASSIFICATION OF SUBJECT MATTER |
|---|---|

H01M4/13(2010.01)i;  H01M10/42(2006.01)i

According to International Patent Classification (IPC) or to both national classification and IPC

| B. | FIELDS SEARCHED |
|---|---|

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; ISI: 宁德时代新能源, 电池, 电芯, 正极, 负极, 克容量, 第一, 第二, 荷电状态, 电压, cathode, anode, mAh/g, gram capacity, first, second, state of charge, SOC, voltage

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022205221 A1 (NINGDE CONTEMPORARY AMPEREX TECHNOLOGY CO., LTD.) 06 October 2022 (2022-10-06)<br>description, page 1 line 25-page 31 line 9 | 1-12 |
| A | WO 2022226748 A1 (NINGDE CONTEMPORARY AMPEREX TECHNOLOGY CO., LTD.) 03 November 2022 (2022-11-03)<br>entire document | 1-12 |
| A | CN 115842113 A (NINGDE CONTEMPORARY AMPEREX TECHNOLOGY CO., LTD.) 24 March 2023 (2023-03-24)<br>entire document | 1-12 |
| A | CN 115986053 A (DONGGUAN AMPEREX TECHNOLOGY LTD.) 18 April 2023 (2023-04-18)<br>entire document | 1-12 |

☐ Further documents are listed in the continuation of Box C.　　☑ See patent family annex.

| | |
|---|---|
| *　Special categories of cited documents:<br>"A"　document defining the general state of the art which is not considered to be of particular relevance<br>"D"　document cited by the applicant in the international application<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
|---|---|
| **10 November 2023** | **24 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/091222**

| Patent document cited in search report | | | Publication date (day/month/year) | Patent family member(s) | | | Publication date (day/month/year) |
|---|---|---|---|---|---|---|---|
| WO | 2022205221 | A1 | 06 October 2022 | EP | 4092804 | A1 | 23 November 2022 |
| | | | | EP | 4092804 | A4 | 17 May 2023 |
| | | | | US | 2022393292 | A1 | 08 December 2022 |
| | | | | US | 11764436 | B2 | 19 September 2023 |
| WO | 2022226748 | A1 | 03 November 2022 | US | 2022393311 | A1 | 08 December 2022 |
| | | | | EP | 4113685 | A1 | 04 January 2023 |
| | | | | EP | 4113685 | A4 | 22 February 2023 |
| | | | | CN | 115529847 | A | 27 December 2022 |
| | | | | IN | 202217009103 | A | 07 April 2023 |
| CN | 115842113 | A | 24 March 2023 | None | | | |
| CN | 115986053 | A | 18 April 2023 | None | | | |

Form PCT/ISA/210 (patent family annex) (July 2022)